# EUROPEAN PATENT SPECIFICATION

(11) **EP 0 457 408 B1**
(45) Date of publication and mention of the grant of the patent: **15.02.1995**
(21) Application number: 91201161.6
(22) Date of filing: 14.05.1991
(51) Int. Cl.: A22B 5/00, A22C 21/06

(54) **Device for cutting loose the rectum of a slaughtered animal carcass**
Vorrichtung zum Herausschneiden des Afters von Schlachttieren
Dispositif pour inciser la région anale d'animaux abattus

(30) Priority: 17.05.1990 NL 9001152
(43) Date of publication of application: 21.11.1991
(73) Proprietor: CCM BEHEER B.V., NL-5672 AD Nuenen (NL)
(72) Inventor: Bekkers, Marinus Franciscus Leonardus, 5694 WS Son en Breugel (NL)
(74) Representative: Timmers, Cornelis Herman Johannes

(56) References cited:
- DE-U- 8 625 835
- GB-A- 2 147 190
- NL-A- 7 303 652
- NL-A- 7 505 057
- NL-A- 8 602 219
- US-A- 2 423 299
- US-A- 2 448 693
- US-A- 2 795 815
- US-A- 3 099 039
- US-A- 3 137 031
- US-A- 3 526 018

## Description

The invention relates to a "device for cutting loose the rectum of the carcass of a slaughtered animal", comprising a shut-off and positioning element for introduction into the anus, which element is fitted at the end of an elongated carrier and has concentrically around it a rotary cutting element, and comprising a vacuum circuit for creating a vacuum around said carrier. Such a device is known from NL-A-8602219 (corresponding to EP-A-0 258 939).

In this known device a vacuum is created around the carrier to stretch the rectum so that a precise cut can be made. However, the presence of vacuum around the carrier has as a result that fat, faeces, and other impurities are sucked into the vacuum system causing it to become blocked after some time and constituting very undesirable source of cross-contamination.

The invention is based on the insight that the vacuum can be used with advantage to remove faeces and impurities, present in the rectum, by providing the positioning element with a bore open at the front side of the positioning element and in connection with the vacuum circuit, and with a flushing liquid supply channel opening out into this bore, the vacuum circuit being provided with means to remove contaminations in the flushing liquid which are sucked into the vacuum circuit during operation.

It is observed that the US patent specification 3 137 031 describes a method and device for cleaning a poultry cloaca during the evisceration procedure by injecting through a hollow pipe a mixture of water and pressurised air into the cloaca and thereafter cutting-of the supply of water and creating a vacuum to withdraw the mixture of water and faeces. This known device, however, is not provided with a positioning element in combination with a rotary cutting element.

Preferred embodiments of the invention are described in the sub-claims.

The invention is explained with reference to the drawing. Herein:
Figure 1 is a longitudinal section through an embodiment of the device according to the invention;
Figure 2 is a schematic view of the way in which the flushing liquid and vacuum pipe are connected.

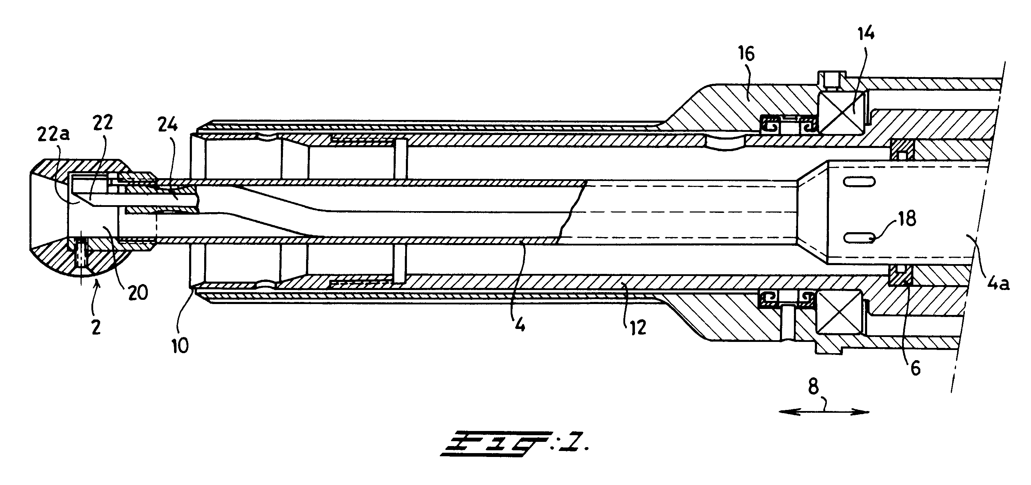

The device shown in Figure 1 for cutting loose the rectum of a slaughtered animal by and large corresponds to that which is used in a plant such as that described in NL-A-8602219 (corresponding to EP-A-0,258,939). This device comprises a flattened circular positioning ball 2 which is fitted on the end of a carrier 4 which is accommodated in suitable guides 6 so that it is movable in the lengthwise direction and can be moved by a drive element (not shown) in the direction of the arrows 8. According to the invention, this carrier is designed as a hollow pipe. Around the front end of the pipe 4 is a cylindrical cutter 10 which is fitted at the end of an also tubular carrier 12, which is coaxial with the pipe 4 and is driven so that it rotates about the central axis; said carrier is supported by means of the bearing 14 in an outer protecting sleeve 16. During use, the positioning ball 2 is first inserted up to a suitable depth through the anus into the rectum; the rotary cutter 10 is then moved forward and the cutting edge thereof cuts away the rectum.

During the operation of this device a vacuum is maintained around the pipe 4 and behind the positioning ball 2; in the embodiment shown this is achieved through the widened continuation 4a of the pipe 4 being connected to a vacuum source and having air suction openings 18 on its cylindrical surface.

The known device of this type has the disadvantage that dirt (faeces and fat) is sucked in through the vacuum pipe, after some time blocking the vacuum system and also being the cause of cross-contamination.

In order to eliminate this disadvantage, according to the invention, the positioning ball 2 is provided with a bore 20 situated in line with the pipe 4, and the outflow opening 22 of a flushing liquid supply pipe 24 opens in this bore. As the figure shows, this flushing liquid supply pipe 24 is positioned in the interior of the pipe 4.

As the figure shows, the outflow opening 22 is bevelled along a plane 22a which intersects the central axis of the pipe 4 at an acute angle.

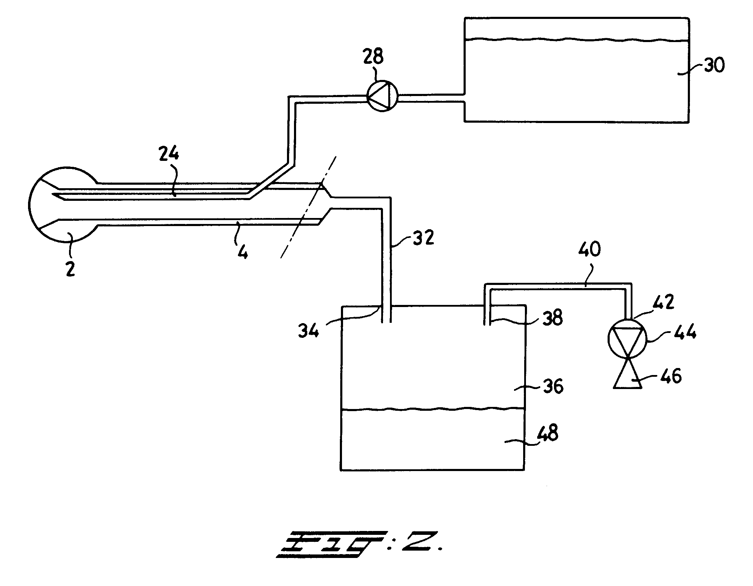

As Figure 2 shows, the pipe 24 is connected by means of a pump 28 to a tank 30 for the flushing liquid, which can be, for example, hot water to which a disinfectant is added if desired. The pipe 4 is connected by means of a pipe 32 to a pipe branch 34 which opens out at the top side of a settling tank 36; at this top side a second pipe branch 38 opens out and is connected by means of the pipe 40 to the suction side 42 of a vacuum pump 44 with inlet 46. The mixture of faeces and liquid supplied through the pipe 32 settles as indicated by 48 in the tank 36.

It has been found in practice that with the measures according to the invention the vacuum system remains free of impurities, while cross-contamination is effectively prevented.

## Claims

1. Device for cutting loose the rectum of the carcass of a slaughtered animal, comprising a shut-off and positioning element (2) for introduction into the anus, which element (2) is fitted at the end of an elongated carrier (4) and has concentrically around it a rotary cutting element (10), and comprising a vacuum circuit (18) for creating a vacuum around said carrier, **characterised in that** the positioning element (2) is provided with a bore (20) open at the front side of the positioning element (2) and in connection with the vacuum circuit (18) and with a flushing liquid supply channel (24) opening out into this bore, the vacuum circuit (18) being provided with means to remove contaminations in the flushing liquid which are sucked into the vacuum circuit (18) during operation.

2. Device according to claim 1, **characterised in that** the carrier (4) comprises a hollow pipe which is to be connected to a vacuum source (44), and of which the interior extends to the bore in the positioning element.

3. Device according to claim 2, **characterised in that** the flushing liquid channel (24) is accommodated in the interior of the pipe.

4. Device according to claims 1 - 3, **characterised in that** the flushing liquid channel (24) is provided with an outlet opening (22) which is bevelled along a plane (22a) which intersects the central axis of the hole at an acute angle.

5. Device according to claims 1 - 4, characterised by air admission apertures (18) provided in the surface of the pipe.

6. Device according to claims 1 - 5, **characterised in that** the flushing liquid is hot water.

7. Device according to claims 1 - 5, **characterised in that** a disinfectant is added to the flushing liquid.

## Patentansprüche

1. Vorrichtung zum Herausschneiden des Afters von Schlachttieren, die ein Verschluß- und Positionierelement (2) zum Einführen in den After umfaßt, wobei das Element (2) am Ende eines länglichen Trägers (4) angebracht ist und ein konzentrisch darumherum angeordnetes Rotationsschneidelement (10) aufweist, und die einen Vakuumkreislauf (18) umfaßt, um ein Vakuum um den Träger herum zu erzeugen, dadurch gekennzeichnet, daß das Positionierungselement (2) mit einer Bohrung (20) versehen ist, die an der Vorderseite des Positionierelements (2) offen ist und in Verbindung mit dem Vakuumkreislauf (18) und mit einem Spülflüssigkeitsversorgungskanal (24) steht, der in diese Bohrung mündet, wobei der Vakuumkreislauf (18) mit Mitteln versehen ist, um Verunreinigungen in der Spülflüssigkeit zurückzuhalten, die während der Betätigung in den Vakuumkreislauf (18) gesaugt wurden.

2. Vorrichtung nach Anspruch 1, dadurch gekennzeichnet, daß der Träger (4) ein Hohlrohr umfaßt, das mit einer Vakuumquelle (44) zu verbinden ist und dessen Inneres sich zu der Bohrung im Positionierelement erstreckt.

3. Vorrichtung nach Anspruch 2, dadurch gekennzeichnet, daß der Spülflüssigkeitskanal (24) im Innern des Rohres untergebracht ist.

4. Vorrichtung nach einem der Ansprüche 1 bis 3, dadurch gekennzeichnet, daß der Spülflüssigkeitskanal (24) mit einer Auslaßöffnung (22) versehen ist, die entlang einer Ebene (22a) abgeschrägt ist, die die zentrale Achse des Loches unter spitzem Winkel schneidet.

5. Vorrichtung nach einem der Ansprüche 1 bis 4, dadurch gekennzeichnet, daß Lufteinlaßöffnungen (18) in der Oberfläche des Rohres vorgesehen sind.

6. Vorrichtung nach einem der Ansprüche 1 bis 5, dadurch gekennzeichnet, daß die Spülflüssigkeit heißes Wasser ist.

7. Vorrichtung nach einem der Ansprüche 1 bis 5, dadurch gekennzeichnet, daß ein Desinfektionsmittel der Spülflüssigkeit zugegeben ist.

## Revendications

1. Dispositif pour exciser le rectum de la carcasse d'un animal abattu, comprenant un élément d'obturation et de positionnement (2) qui est destiné à être introduit dans l'anus, qui est adapté à l'extrémité d'un porteur allongé (4) et qui comporte un élément coupant rotatif (10) qui lui est concentrique, le dispositif comprenant encore un circuit de vide (18) destiné à créer un vide autour dudit porteur, **caractérisé en ce que** l'élément de positionnement (2) comporte un trou (20) ouvert à l'avant de l'élément de positionnement (2), et est relié au circuit de vide (18) et est pourvu d'un canal d'alimentation en liquide de rinçage (24) débouchant dans ce trou, la circuit de vide (18) étant muni de moyens pour enlever les produits contaminants du liquide de rinçage et les aspirer dans le circuit de vide (18) pendant l'opération.

2. Dispositif suivant la revendication 1, **caractérisé en ce que** le porteur (4) comprend un tuyau creux qui est à relier à une source de vide (44) et dont l'intérieur va jusqu'au trou situé dans l'élément de positionnement.

3. Dispositif suivant la revendication 2, **caractérisé en ce que** le canal de liquide de rinçage (24) est logé à l'intérieur du tuyau.

4. Dispositif suivant les revendications 1 à 3, **caractérisé en ce que** le canal de liquide de rinçage (24) comporte une ouverture de sortie (22) qui est coupée en biseau suivant un plan (22a) qui coupe l'axe central du trou sous un angle aigu.

5. Dispositif suivant les revendications 1 à 4, **caractérisé** par des ouvertures d'admission d'air (18) prévues à la surface du tuyau.

6. Dispositif suivant les revendications 1 à 5, **caractérisé en ce que** le liquide de rinçage est de l'eau chaude.

7. Dispositif suivant les revendications 1 à 5, **caractérisé en ce que** on ajoute au liquide de rinçage un désinfectant.
